# EUROPEAN PATENT SPECIFICATION

(11) **EP 0 763 693 B1**
(45) Date of publication and mention of the grant of the patent: **19.12.2001**
(21) Application number: 96306615.4
(22) Date of filing: 12.09.1996
(51) Int. Cl.: F23Q 7/00

(54) **A ceramic heater device and a method of making the same and a glow plug into which the ceramic heater device is incorporated**
Keramische Heizvorrichtung und Verfahren zur Herstellung dafür, und Glühkerze mit einer solchen keramischen Heizvorrichtung
Dispositif de chauffage en céramique et sa méthode de fabrication, et bougie à incandescence comportant un tel dispositif de chauffage en céramique

(30) Priority: 12.09.1995 JP 23375995; 11.09.1996 JP 24081196
(43) Date of publication of application: 19.03.1997
(73) Proprietor: NGK SPARK PLUG CO., LTD, Nagoya-shi (JP)
(72) Inventor: Konishi, Masahiro, Takatsuji-cho, Mizuho-ku, Nagoya-shi (JP); Tatematsu, Kazuho, Takatsuji-cho, Mizuho-ku, Nagoya-shi (JP)
(74) Representative: Senior, Alan Murray

(56) References cited:
- DE-A- 3 734 274
- DE-A- 3 736 310
- DE-A- 3 817 843
- PATENT ABSTRACTS OF JAPAN vol. 018, no. 565 (M-1694), 28 October 1994 & JP-A-06 201128 (TDK CORP), 19 July 1994,
- PATENT ABSTRACTS OF JAPAN vol. 012, no. 484 (M-776), 16 December 1988 & JP-A-63 201425 (HITACHI METALS LTD;OTHERS: 01), 19 August 1988,
- DATABASE WPI Section Ch, Week 8604 Derwent Publications Ltd., London, GB; Class L02, AN 86-024649 XP002022662 & JP-A-60 246 268 (MITSUBISHI METAL KK) , 5 December 1985

## Description

This invention relates to a ceramic heater and a method of making the same in which a ceramic resistor is embedded in a sintered silicon nitride body, and more specifically to the ceramic heater in use for a glow plug which is an auxiliary starter of an internal combustion engine such as a diesel engine and in use for other heating or cooking appliance.

Among a wide variety of electrically conductive ceramics, there have been provided silicide, carbonate and nitride compounds having an element selected from the group consisting of W, Ta, Nb, Ti, Mo, Zr, Hf, V and Cr, which are suitable for a heat-generating resistor to which electrical current is fed, because these compounds have high melting points and at the same time have specific resistivities as low as 10⁻⁵ ~ 10⁻¹⁰ Ω·cm. For these reasons, the heat-generating resistor for use at high temperature has been produced with the above silicide, carbonate and nitride compounds as main constituents. Then, the heat-generating resistor is normally incorporated into a ceramic insulator such as a silicon nitride based ceramic to form the ceramic heater superior in high strength and oxidation resistant property as exemplified by Japanese Patent Laid-Open Application Nos. 63-37587 and 1-313362.

In the ceramic heater in which the ceramic resistor is made of e.g. tungsten carbide (WC) alone and embedded in high strength and high oxidation resistant ceramic insulator, the ceramic resistor is likely cracked due to the thermal expansional difference between the resistor and the ceramic insulator. This may cause disconnection of the resistor under repetitive rapid heating cycles so as to shorten a service life of the ceramic heater.

For these reasons, it has been introduced a ceramic heater in which a ceramic resistor is tempered by mixing electrically conductive ceramic particles with insulative or rather insulating ceramic particles (e.g., silicon nitride) and is embedded in high strength and high oxidation resistant ceramic insulator and co-fired as shown by Japanese Patent Laid-Open Application Nos. 60-60983, 60-216484, 60-254586, 63-96883, 64-61356 and 2-229765.

However, with the ceramic insulator (or rather insulative) grains residing at the intergranular space between the electrically conductive ceramic particles, the ceramic insulator grains and grain boundary phase cause an electrolysis under a heating operation due to an intergranular electrical potential between the electrically conductive ceramic particles so that unfavorable corrosion appears on the ceramic resistor itself resulting in increase in its electrical resistance.

Therefore, it is an object of the present invention to provide a ceramic heater useful for a glow plug and a method of making the same, which heater is capable of maintaining a good function for an extended period of time, high strength, and high oxidation resistance and providing high reliability such as good stability of resistance, etc.

A sintered ceramic heater according to the precharacterising portion of claim 1 is disclosed in Patent Abstracts of Japan, vol 18, No. 565 (M-1694), 28 October 1994.

According to the invention, there is provided a sintered ceramic heater comprising:
a heat-generating resistor, and a ceramic insulator surrounding said resistor;
said resistor consisting essentially of electrically conductive ceramic grains, secondary ceramic grains and a boundary grain phase, characterised in that said boundary grain phase has the general formula

   2E₂O₃·Si₂₋ₓAlₓN₂₋ₓO₁₊ₓ

   wherein E represents at least one element of rare earth metals and 0 < x < 2.

With the ceramic resistor of the ceramic heater comprising the electrically conductive ceramic grains, the secondary insulative ceramic grains and the grain boundary crystallized phase, it is possible to ease the thermal expansional difference between the ceramic resistor and the ceramic insulator, and thereby effectively protecting the resistor against the cracks due to the thermal stress so as to contribute to an extended service life of the ceramic heater, and it is also possible to prevent the ceramic resistor from degrading its specific resistivity under a high temperature operation.

According to a further embodiment of the present invention, the electrically conductive ceramic grains contain at least one component selected from the group consisting of WC, MoSi₂ and Mo₅Si₃.

According to another embodiment of the present invention, the secondary ceramic grains contain a compound having an expanded β-phase silicon nitride lattice and having the general formula Si_{6-z}Al_{z}N_{8-z}O_{z}, wherein 0 < z ≤ 5.

According to a further embodiment of the present invention, a specific resistivity of the ceramic resistor is greater than 10⁻⁴ Ω·cm.

When the ceramic resistor is made of WC (tungsten carbide) particles only, the specific resistivity of the ceramic resistor becomes less than 10⁻⁴ Ω·cm. This makes it difficult to enlarge the cross sectional area of the ceramic resistor. That is to say, upon connecting e.g., a tungsten lead (diameter: 0.2 - 0.3 mm) to the heat-generating resistor, it is possible for the present invention to embed a front end (e.g., 3 - 4 mm in length) of the lead in the resistor, and thereafter to co-fire the resistor and the lead thereby to strengthen the electrical connection therebetween.

Further, when the ceramic resistor is made of the WC particles alone, disconnection occurs on the ceramic heater due to the thermal expansional difference between an insulating ceramic material and the resistor embedded in the insulating ceramic material. With sialon ceramic grains and the grain boundary phase made in the WC particles, it is possible to relieve the thermal stress of the ceramic resistor so as to effectively avoid disconnection from the surrounding insulator or cracks of the ceramic heater.

The present invention is based on an analytical discovery on an intertexture of the secondary grains having the expanded β-phase silicon nitride lattice and having the general formula Si_{6-z}Al_{z}N_{8-z}O_{z}, wherein 0 < z ≦ 5, and the grain boundary phase having the general formula 2E₂O₃·Si₂₋ₓAlₓN₂₋ₓO₁₊ₓ, wherein E represents at least one element of rare earth metals and 0 < x < 2.

With the intertexture discovered by the inventors, it is possible to avoid an electrolysis of the WC-containing ceramic resistor despite of an electrical potential applied across the resistor, in other words between the WC grains, and thereby causing no deterioration of the ceramic resistor without causing any increase in its electrical resistance.

According to another embodiment of the present invention, a specific resistivity of the resistor is greater than 10⁻⁴ Ω·cm, but less than 1,000 Ω·cm.

According to other aspect of the present invention, each of the electrically conductive ceramic grains and the secondary ceramic grains in the sintered ceramic resistor have an average grain size of 2-5 microns in diameter.

In actuality, it is found that the average grain size measures approx. 3 microns after sintering the electrically conductive ceramic grains and the secondary ceramic grains. This is based on the fact that the grain grow greater in size after a sintering procedure than those before sintering.

According to another embodiment of the present invention, the ceramic insulator consists essentially of a silicon nitride ceramic material, when the resistor contains the sialon grains. As in this instance, it is preferable to arrange it in such a way that the thermal expansional coefficient of the outer ceramic insulator be substantially the same as that of the secondary grains in the resistor.

The outer ceramic insulator can be made of a silicon aluminum oxinitride ceramic material consisting essentially of an expanded β-phase silicon nitride lattice and having the general formula Si_{6-z}Al_{z}N_{8-z}O_{z}, wherein 0 < z ≦ 5 and a secondary phase containing at least one of rare earth metals. Today, the silicon aluminum oxinitride is generally called as sialon which has been disclosed by e.g. GB Patent No. 1,600,602.

According to another embodiment of the present invention, one of the rare earth metals is preferably selected from the group of consisting erbium, ytterbium and yttrium to form (2E₂O₃·Si₂₋ₓAlₓN₂₋ₓO₁₊ₓ) in the heat-generating resistor. 2E₂O₃·Si₂₋ₓAlₓN₂₋ₓO₁₊ₓ represents a crystallized phase. Therefore, as far as this crystallized phase is made by sintering, any other rare earth metal or its oxide can be used to meet requirements of the invention.

According to a further embdiment of the present invention, said sintered ceramic heater further comprises a pair of me leads, connected to said resistor, said leads also being surrounded by said ceramic insulator.

In this instance, the pair of metal leads can be made of tungsten by way of example.

According to a further embodiment of the present invention, there is provided a method of making a sintered ceramic heater comprising the steps of:
(a) mixing electrically conductive ceramic particles, insulating ceramic particles and rare earth metal oxides to form into a mixture component;
(b) preforming said mixture component to provide an unfired ceramic resistor to which a pair of metal leads are electrically connected.
(c) covering said unfired ceramic resistor and said metal leads with ceramic powder, thereby to form an unfired ceramic heater having leads; and
(d) co-firing said unfired ceramic heater, to combine said metal leads and said ceramic powder under a non-oxidizing atmosphere at a sintering temperature, and to form said unfired ceramic resistor into a resistor consisting essentially of electrically conductive ceramic particles, secondary ceramic particles and a boundary grain phase having the general formula

   2E₂O₃·Si₂₋ₓAlₓN₂₋ₓO₁₊ₓ

   wherein E represents at least one element of rare earth metals and 0 < x < 2..

According to a further embodiment of the present invention, the electrically conductive ceramic particles in the step (a) contain substantially 40-80% by weight of at least one component selected preferably from the group consisting of WC, MoSi₂, Mo₅Si₂ and mixture thereof.

According to a further embodiment of the present invention, the insulating ceramic particles in the step (a) are substantially consisting of 18.9 - 58.9% by weight of silicon nitride, 0.5-5% by weight of aluminum nitride, 0.1-3% by weight of alumina and 0.5-4.5% by weight of at least one of rare earth metal oxides.

According to a further embodiment of the present invention, the rare earth metal oxide is selected from the group consisting of Y₂O₃, Yb₂O₃, Er₂O₃ and a mixture thereof.

According to a further embodiment the present invention, a glow plug is produced into which the ceramic heater is incorporated.

According to a further embodiment of the present invention, an electrical resistance value measured across ends of the metal leads of the ceramic heater is greater than 500 mΩ.

According to a further embodiment of the present invention, an electrical resistance value measured across the ends of the metal leads of the ceramic heater is in the range from 500 to 900 mΩ.

### BRIEF DESCRIPTION OF THE DRAWINGS

Fig. 1 is a longitudinal cross sectional view of a ceramic heater according to an embodiment of the present invention; with other metal casings,
Fig. 2 is an enlarged perspective view of a heat-generating ceramic resistor;
Fig. 3 is a longitudinal cross sectional view of a glow plug used for an internal combustion engine, wherein a ceramic heater according to the invention is incorporated;
Fig. 3a is a schematic view of an unfired ceramic body for a heat-generating resistor upon preforming it;
Fig. 3b is an enlarged view of the unfired ceramic body for a heat-generating resistor;
Fig. 3c is a cross sectional view of another ceramic resistor showing when the ceramic resistor was prepared in two tiers by means of a pattern printing procedure;
Fig. 4 is a table showing a physical property of specimens in which various ceramic components are applied to manufacture the heat-generating resistor;
Fig. 4a is an enlarged cross sectional view of a main portion of the ceramic heater; according to the invention,
Fig. 4b is a magnified view of a portion of the ceramic heater designated by a circle (P) of Fig. 4a;
Fig. 5 is a graphical representation of data obtained by an X-rayed analysis; and
Fig. 6 is a graphical representation showing a relationship between a specific resistivity (Ω·cm) of the heat-generating ceramic resistor and a ratio of WC to Si₃N₄ by weight at preparation of resistor mixture.

### DETAILED DESCRIPTION OF PREFERRED EMBODIMENTS OF THE INVENTION

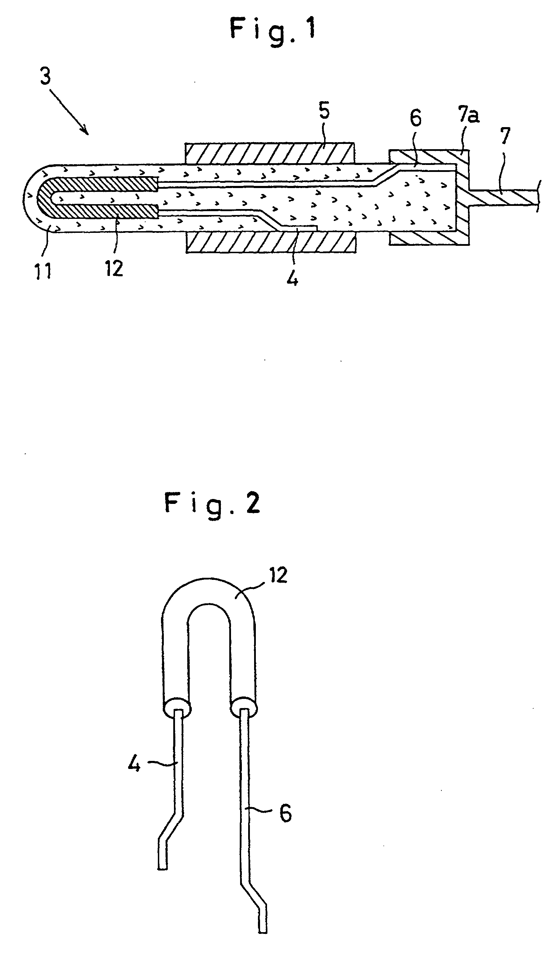

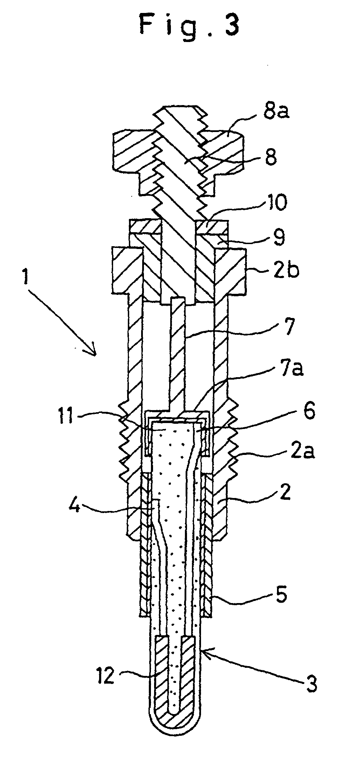

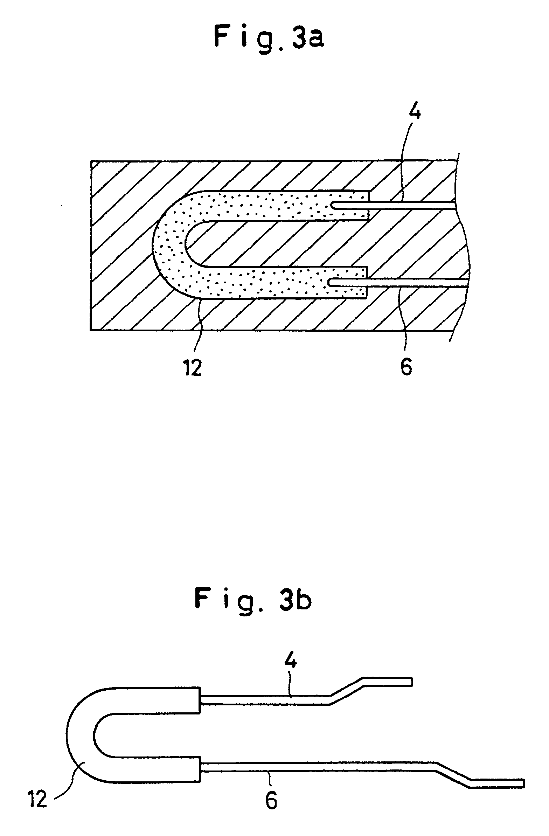

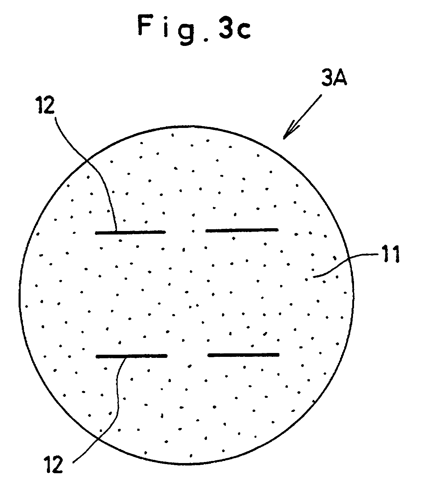

Referring to Fig. 1 which shows a ceramic heater 3 which is incorporated into a glow plug 1 in Fig. 3. The glow plug 1 has a cylindrical metal shell 2 which is to be mounted on an internal combustion engine (not shown). The ceramic heater 3 is provided in the metal shell 2 so that a front end of the heater 3 extends beyond the metal shell 2. A metallic casing 5 is provided to firmly hold the ceramic heater 3 in place. A pair of metal leads 4, 6 are provided, one of which is connected to the metal shell 2 for grounding, and the other is conneted to a middle axis 7 provided within the metal shell 2. The middle axis 7 is connected to a terminal electrode 8 which is supported within the metal shell 2 by means of an insulator 9 which is secured by a nut 10 against removal.

The metal shell 2, which has a male thread portion 2a and a hexagonal nut portion 2b, is to be grounded upon mounting it on a cylinder head of the internal combustion engine.

The ceramic heater 3 generally forms a bar-like configuration which has a U-shaped ceramic resistor 1 embedded in a sintered ceramic body 11 (Fig. 3) with silicon nitride as a main constituent as described in detail hereinafter.

The ceramic resistor 12 is formed by sintering tungsten carbide, silicon nitride, aluminum nitride, aluminum oxide and some sintering aids. The ceramic resistor 12 constitutes electrically conductive grains of tungsten carbide, secondary grains having an expanded β-phase silicon nitride (β') expressed by the general formula Si_{6-z}Al_{z}N_{8-z}O_{z} (0 < z ≦ 5) (saialon) and a grain boundary phase having 2E₂O₃·Si₂₋ₓAlₓN₂₋ₓO₁₊ₓ (0 < x < 2). An electrical resistance value of the ceramic resistor 12 is less than 1,000 Ω·cm, but greater than 10⁻⁴ Ω·cm. To the ends of the ceramic resistor 12, a pair of metal leads 4, 6 are connected and they are embedded in a sintered ceramic body 11 which is a low-heated portion of the ceramic heater 3. The other end of the metal lead 6 is exposed outside at a rear end of the ceramic heater 3 opposite to the ceramic resistor 12. The other end of the metal lead 4 is exposed ouside at a middle of the sintered ceramic body 11.

The metal casing 5 is placed within the front end of the metal shell 2, and at the same time, holding the ceramic heater 3 at the middle of the sintered ceramic body 11. The metal casing 5 further has a function to ground the metal leads 4, 6 by way of the metal shell 2.

The middle axis 7, which is connected to the terminal electrode 8, is placed in an electrically insulating relationship with the metal shell 2. A lower end of the middle axis 7 has an inverted cup-shaped cap 7a which covers a rear end of the sintered ceramic body 11 so as to electrically connects the metal lead 6 to the terminal electrode 8.

The terminal electrode B has a connector nut 8a to fix a connector (not shown) thereto so that the terminal electrode 8 is energized from an exterior power source circuit (not shown).

The ceramic insulator 9 is formed into a tubular configuration, and placed within a rear end portion of the metal shell 2 to fixedly support the terminal electrode 8 by means of the nut 10.

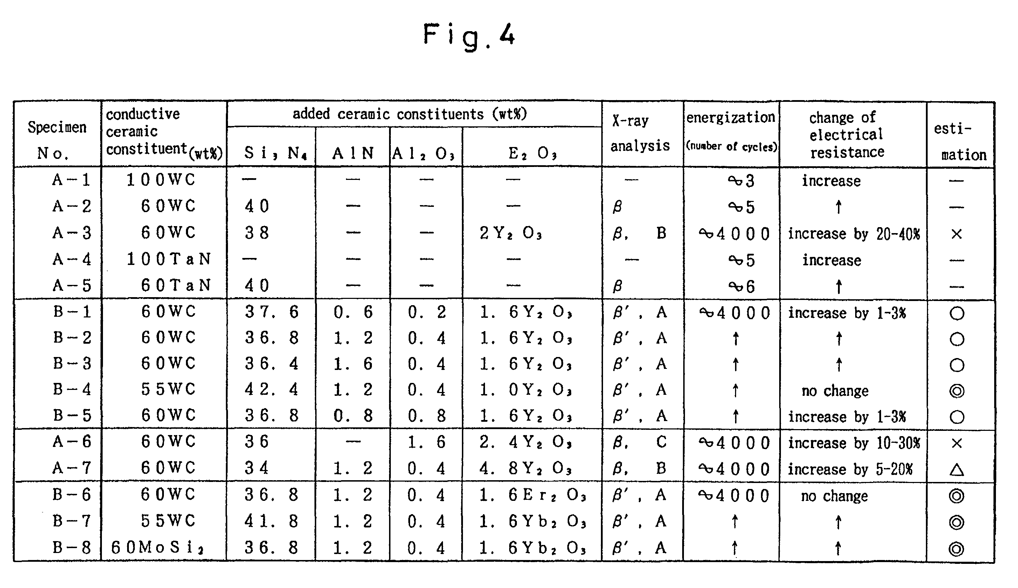

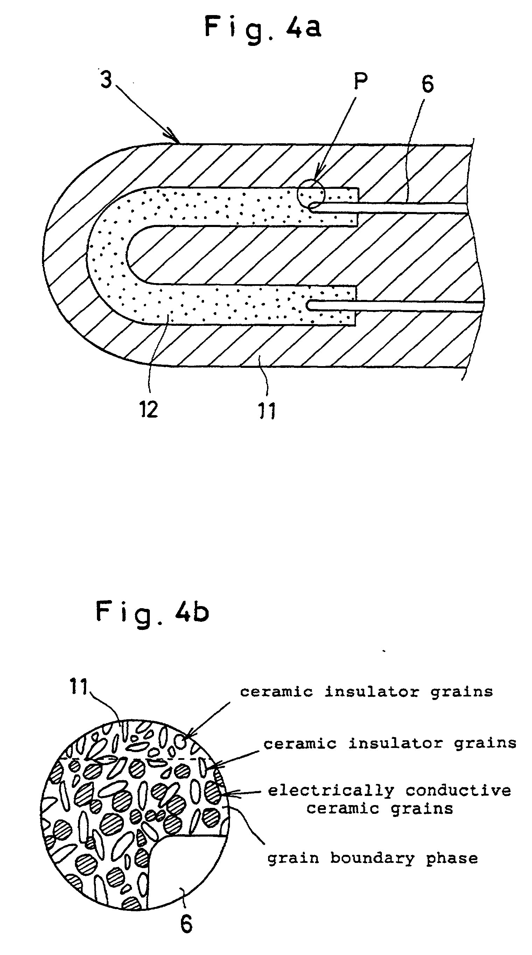

With reference to a Table of Fig. 4, a method of making the ceramic heater 3 is described as follows:

In this instance, added constituents in Fig. 4 are in the terms of percentage by weight, and the percentage and the constituents are merely by way of illustration, and not confined to them only.

### First Step

(i) An electrically conductive ceramic powder is prepared e.g., 30-80 % by weight, by selecting from the group of carbonate, silicide and nitride compounds (e.g., WC, MoSi₂, Mo₅Si₃, TaN) which contain a metal selected from the group consisting of W, Ta, Nb, Ti, Mo, Zr, Hf, V and Cr. Their prefered average grain size is 0.5 µm in diameter. Added to the conductive ceramic powder to form a slurry mixture, are ceramic powders of silicon nitride (e.g., 18.9-58.9 % by weight), aluminum nitride (e.g., 0.5-5.0 % by weight) and aluminum oxide (e.g., 0.1-3.0 % by weight) with an addition of rare earth metal oxides (e.g., 0.5-4.5 % by weight) such as Yb₂O₃, Y₂O₃ and Er₂O₃. Then, the slurry mixture is pulverized and kneaded with wet treatment for approx. 72 hours. In this instance, a mean particle size of the added powder constituents is most preferably in the range of 0.2-1.0 µm, but is preferably in the range of 0.2-5.0 µm.

It is most preferable that the rare earth metal is selected from the group of consisting erbium, ytterbium and yttrium, in order to represent E of the general formula of (2E₂O₃·Si₂₋ₓAlₓN₂₋ₓO₁₊ₓ) which is found at the grain boundary in the heat-generating ceramic resistor 12. An oxide of yttrium (Y), lanthanum (La), cerium (Ce), neodymium (Nd), dysprosium (Dy), praseodymium (Pr), erbium (Er), ytterbium (Yb) or the like is prefered as a raw material for the boundary phase. Among the rare earth metals of Er, Yb and Y in the general formula, especially Er and Yb are suitable for the glow plug because they provide the ceramic resistor 12 with a good calcined condition and a good physical strength after sintering.

In this instance, the average grain sizes of 2-5 µm of the electrically conductive ceramic particles and the secondary ceramic particles are represented by a grain growth after sintering the ceramic resistor as described hereinafter. It is preferable that the outer ceramic insulator 11 which surrounds the heat-generating resistor 12 has the same thermal expansional coefficient as that of secondary ceramic grains which are in the resistor 12. In other word, ceramic particles which constitute unfired ceramic body for the ceramic insulator 11 are preferably the same material as the insulating ceramic powder which is added to form an unfired ceramic heater body for the heat-generating ceramic heater 12.

### Second Step

(ii) The slurry mixture, thus treated at Step 1, is accommodated into a vessel to desiccate it for 12 hours so as to provide a ceramic powder mixture.

### Third Step

(iii) The ceramic powder mixture is mixed with an organic binder for 3 hours. By way of example, the binder constitutes 30-70 % by weight consisting of a polyethylene powder or a polyethylene based mixture with wax and vinyl acetate.

### Fourth Step

(iv) With the use of a pelletizer, the powder mixture, thus treated with the binder, is granulated into grains having an average granulated grain size of approx. 1 mm in diameter.

### Fifth Step

(v) As shown in Fig. 2, the granulated grain mixture is preformed into a U-shaped configuration by means of an injector machine (not shown) so as to provide an unfired ceramic resistor. In this instance, each one of the metal leads 4, 6 are connected to each end of the unfired ceramic resistor concurrently when preforming the mixture into the U-shaped configuration as schematically shown in Figs. 3a, 3b.

It stands as a matter of course that the connection of the metal leads 4, 6 may be done after preforming the granulated mixture into the U-shaped configuration.

### Sixth Step

(vi) With an addition of the binder, 90 % by weight of silicon nitride, 5 % by weight of Al₂O₃ and 5 % by weight of Al₂O₃ powder (average grain size: 0.7 µm) are mixed with wet treatment to obtain an insulating powder mixture for the insulator 11 by means of spray dry procedure.

### Seventh Step

(vii) The unfired ceramic resistor of the fifth step is embedded in the insulating powder mixture and pressed together into a bar-like configuration. In order to obtain a sintered ceramic heater body, the unfired ceramic resistor and the insulating powder mixture surrounding it are co-fired (concurrently sintered) at 1750 °C under the pressure of 300kg/cm² in a nitrogen (N₂) atmosphere for about 3 hours.

In this step, hydrogen H₂ or inert gases (e.g., Ar) may be used in lieu of the nitrogen gas.

The powder mixture of sixth step may be pressed into two flat half plates. In this case the powder mixture obtained by the third step may be rendered into paste-like slurry which is printed on each of the flat half plates along a heat-generating resistor pattern. Then, the flat half plates are joined together with a ceramic insulating material, to be co-fired thereafter. After co-firing these flat half plates to sinter them integrally into a sintered ceramic heater body, two ceramic resistors 12 are embedded air-tightly in two tiers as shown in Fig. 3c. The sintered ceramic body is appropriately polished to produce a cylindrical ceramic heater 3A circular in cross senction as shown in Fig. 3c for the glow plug.

### Eighth Step

(viii) The sintered heater body is milled into an elongation measuring 3.5 mm in diameter to provide a contour of the ceramic heater 3 with each end of the metal leads 4, 6 exposed outside. With these procedures thus carried out, the ceramic heater 3 is completed in which the ceramic resistor 12 and the metal leads 4, 6 are embedded in the sintered silicon ceramic body 11.

After completing the ceramic heater 3, the main portion of the ceramic resistor 12 of Fig. 4a is microscopically analyzed as shown in Fig. 4b. As indicated by a magnified view of Fig. 4b, it is found that the ceramic resistor 12 has the secondary insulator ceramic grains (silicon aluminum oxinitride), the electrically conductive ceramic grains and the grain boundary phase as described hereinafter. As known by GB Patent No. 1600602, the silicon aluminum oxinitride of the secondary ceramic particles is abbreviated into "sialon" which is expressed by the general formula Si_{6-z}Al_{z}N_{8-z}O_{z} (0 < z < 5) having an expanded β-silicon nitride lattice (so-called as β'-silicon). The aluminum nitride is necessary in the raw materials to form the sialon and the grain boundary phase having the general formula of 2E₂O₃·Si₂₋ₓAlₓN₂₋ₓO₁₊ₓ (where E represents at least one element of rare earth metals and 0 < x < 2) in the ceramic resistor 12. This formula prevents the ceramic resistor from deteriorating under electrical potential at high temperature of 800-1300 °C, according to the invention.

### Experimental Test Results

On the basis of the method of making the ceramic heater 3, the specimens Nos. A1 - A7 and B1 - B8 were produced according to Table in Fig. 4.

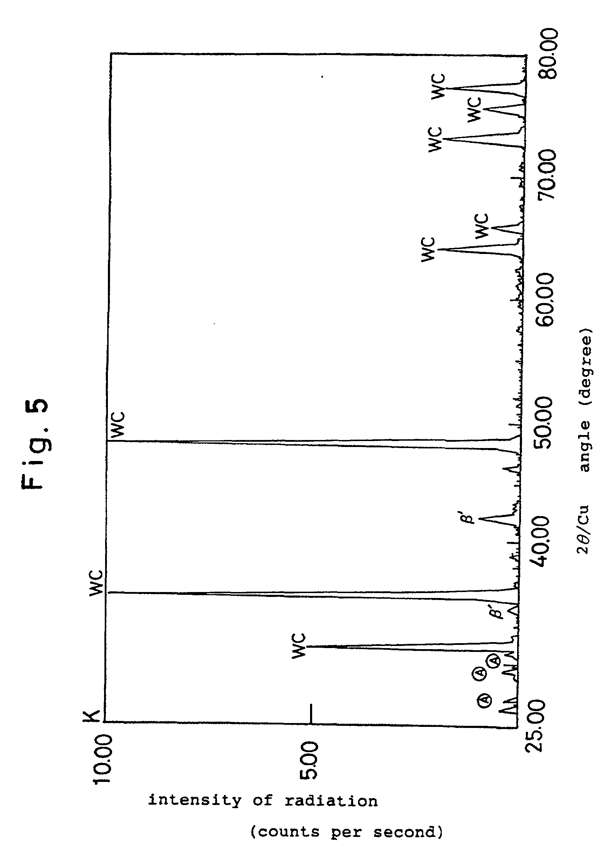

In the specimens Nos. B1 - B8 according to the present invention, β'-sialon and 2E₂O₃·Si₂₋ₓAlₓN₂₋ₓO₁₊ₓ (0 < x < 2) are confirmed as indicated at the secondary ceramic grains (β') and the grain boundary phase (A) respectively by an X-rayed analysis data as shown in Fig. 5. The β'-sialon and the 2E₂O₃·Si₂₋ₓAlₓN₂₋ₓO₁₊ₓ with E as the rare earth metal exhibit a recrystallized grain and a crystallized boundary phase, respectively, appeared in the ceramic resistor 12.

In this instance, the secondary ceramic grains contain a compound having an expanded β-phase silicon nitride lattice (silicon aluminum oxinitride) and having the general formula Si_{6-z}Al_{z}N_{8-z}O_{z} (0 < z ≦ 5).

In the counterpart specimens Nos. A1 - A7, no appearance of 2E₂O₃·Si₂₋ₓAlₓN₂₋ₓO₁₊ₓ (0 < x < 2) is confirmed. In Table of Fig. 4, notation β represents β-Si₃N₄, notation β' represents β'-sialon and notation A represents 2E₂O₃·Si₂₋ₓAlₓN₂₋ₓO₁₊ₓ (0 < x < 2). Notation B exhibits Si₃N₄·Y₂O₃, and notation C exhibits non-crystallized phase (vitreous phase).

Upon measuring variations of electrical resistance, each of the specimens Nos. B1 - B8 and A1 - A7 is cyclically energized for five minutes and cooled for one minute at 1300 °C of a saturated temperature. The variations of electrical resistance of the ceramic heater is shown by Table of Fig. 4 in which a double circle represents no deterioration, a single circle indicates a slight deterioration, a delta shows some degree of deterioration and a exhibits a significant degree of deterioration. A high estimation degree was insured by repeating the experimental test five times each.

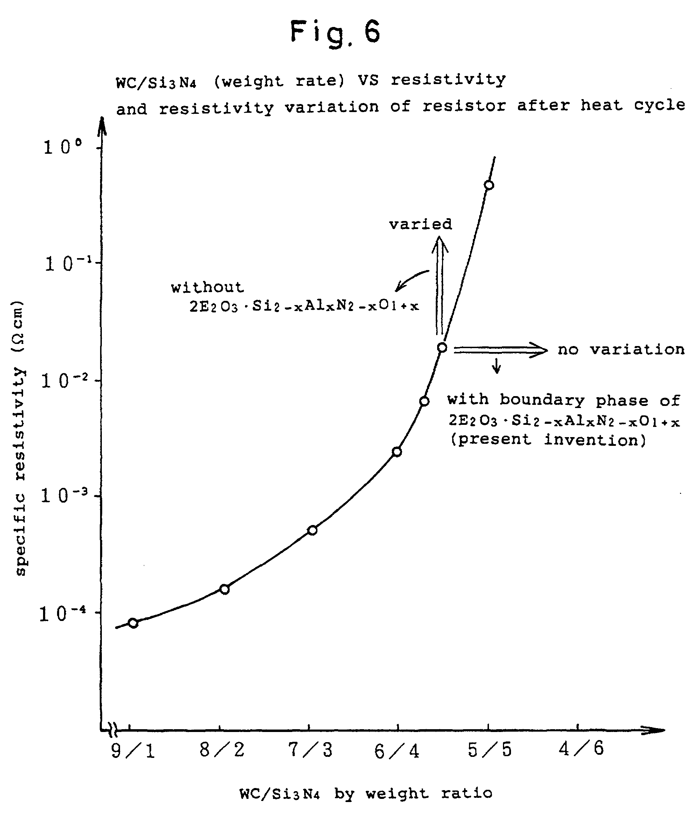

Fig. 6 shows a relationship between a specific resistivity (Ω·cm) of the ceramic resistor 12 and a ratio of WC to Si₃N₄ by weight in the resistor. The specific resistivity can be changed depending on an effective ratio of an average particle size of the electrically conductive particles to that of the secondary ceramic particles. With the increase of the ratio, the resistivity decreases, and the resistivity increases with the decrease of the effective ratio. In Fig. 6, the specific resistivity of the ceramic resistor was measured based on the raw material powder which has the electrically conductive particles (WC) having a grain size of 1 µm on average and the secondary ceramic particles (Si₃ N₄) having a grain size of 1 µm on average. Upon charting the graphical representation of Fig. 6, sintered ceramic bodies were prepared each by changing the ratio of WC/Si₃ N₄ by weight so as to measure the specific resistivity of the ceramic resistor respectively.

### Advantages

According to one of the embodiments of the present invention, the ceramic resistor 12 is made from conductive ceramic (WC), silicon nitride, aluminum nitride, aluminum oxide with an addition of sintering aids of rare earth metal oxides such as Y₂O₃ and Er₂O₃. These constituents make it possible to insure a high sintering capability, so that the unfired ceramic resistor is sufficiently sintered resulting in that the ceramic resistor 12 is co-fired and embedded in the sintered ceramic body 11. This procedures provides the ceramic heater 3 with a densely coagulated texture so as to enhance its durability under the circumstances in which the ceramic heater 3 is cyclically heated and cooled rapidly.

Further, upon sintering the ceramic heater 12 to be applied to the glow plug 1, the ceramic resistor 12 is made of the electrically conductive ceramic grains, the secondary ceramic grains and the crystallized boundary phase so that it is possible to relieve the thermal expansional difference between the ceramic resistor 12 and the sintered ceramic body 11. This decreases the likelihood in which the ceramic resistor 12 is subjected to a greater thermal stress due to the expansional difference between the resistor 12 and the silicon nitride based sintered ceramic body 11 surrounding the resistor 12 even under repetitive rapid heat and cool cycles. It also makes it possible to prevent the resistor 12 from being inadvertently broken, and to contribute to an extended service life of the ceramic heater 3.

That is to say, it is possible to maintain substantially constant electrical resistance of the ceramic heater, and at the same time, insuring its anticipated performance with a high strength and reliability for an extended period of time, which are all required in the glow plugs for diesel engines.

With the secondary ceramics grains and the grain boundary phase of the invention resided at the intergranular space of the electrically conductive ceramic grains of the ceramic resistor 12, it is possible to prevent the intergranular constituents around the electrically conductive ceramic grains from developing into electrolysis when the electrical potential is applied across the electrical conductive ceramic grains.

It is also possible to prevent the electrolysis of the boundary phase itself even when the electrical potential is subjected across the leads 4, 6 in high temperature environment of 800-1300 °C, and thus significantly supressing the unusual increase in the electrical resistance value of the ceramic heater so as to eventually maintain the long service life of the glow plug 1 with a high reliability even under an extremely extended use of the ceramic heater 3.

If the ceramic resistor 12 is made only of the electrically conductive ceramic particles (e.g., WC), it becomes difficult to control the specific resistivity of the ceramic resistor because its specific resistivity goes down as low as 10⁻⁴ Ω·cm at most. This makes it difficult to enlarge the cross sectional area of the ceramic resistor, as opposed to the present embodiment case of Fig. 1 in which the tungsten leads 4, 6 (0.2-0.3 mm in diameter) are partly embedded in the ceramic resistor 12 for electrical connection.

However, as in the embodiment of the invention wherein the resistor 12 is made of the electrically conductive ceramic particles with the addition of the ceramic insulator particles, it is possible to readily enlarge the cross sectional area of the ceramic resistor 12 so as to adjust the specific resistivity from 10⁻⁴ - 1000 Ω·cm by optimizing the weight ratio of the electrically conductive ceramic particles to the ceramic insulator particles as shown in Fig. 6. By co-firing the ceramic resistor 12, the ceramic insulator 11 and the metal leads 4, 6 embedded in the ceramic insulator 11, it is also possible to strengthen the electrical connection between the metal leads 4, 6 and the ceramic resistor 12

As for the ceramic resistor 12 applied to the glow plug properly, it is prefereble that an electrical resistance value measured across the exposed ends of the metal leads is greater than 500 mΩ, however it is desirable that the resistance value is in the range from 500 mΩ - 1 Ω when is taken the temperature-rise and durability into consideration. The electrical resistance value measured across the exposed ends of the metal leads 4, 6 was approx. 700 mΩ according to the glow plug embodied by the present invention.

### Modification Forms

It is noted that instead of applying the ceramic heater to the glow plug, the ceramic heater may be used to a room warming apparatus, an electrical cooking stove, a locally heating apparatus in the industry installations and other types of heating devices.

It is also appreciated that the ceramic heater may be supported with a heat-resistant metal cover to further improve the mechanical strength or the oxidation resistant property, etc.

## Claims

1. A sintered ceramic heater (3) comprising:
a heat-generating resistor (12), and a ceramic insulator (11) surrounding said resistor;
said resistor (12) consisting essentially of electrically conductive ceramic grains, secondary ceramic grains and a boundary grain phase, **characterised in that** said boundary grain phase has the general formula
2E₂O₃·Si₂₋ₓAlₓN₂₋ₓO₁₊ₓ
wherein E represents at least one element of rare earth metals and 0 < x < 2.

2. A sintered ceramic heater as recited in claim 1, wherein said electrically conductive ceramic grains contain at least one component selected from the group consisting of WC, MoSi₂ and Mo₅Si₃.

3. A sintered ceramic heater as recited in claim 1 or 2, wherein said secondary ceramic grains contain a compound having an expanded β-phase silicon nitride lattice and having the general formula Si_{6-z}Al_{z}N_{8-z}O_{z}, wherein 0 < z ≤ 5.

4. A sintered ceramic heater as recited in claim 1, 2 or 3, wherein a specific resistivity of said resistor is greater than 10⁻⁴ Ω.cm.

5. A sintered ceramic heater as recited in any one of claims 1-4, wherein a specific resistivity of said resistor is greater than 10⁻⁴ Ω.cm, but less than 1,000 Q.cm.

6. A sintered ceramic heater as recited in any one of claims 1-5, wherein each of said electrically conductive ceramic grains and said secondary ceramic grains have an average grain size of 2-5 µm in diameter.

7. A sintered ceramic heater as recited in any one of claims 1-6, wherein said surrounding ceramic insulator (11) consists essentially of a silicon nitride ceramic material.

8. A sintered ceramic heater as recited in any one of claims 1-7, wherein said rare earth metal is selected from the group consisting of erbium, ytterbium and yttrium.

9. A sintered ceramic heater according to any one of claims 1 to 8, further comprising:
a pair of metal leads (4, 6) connected to said resistor (12), said leads (4, 6) also being surrounded by said ceramic insulator (11).

10. A sintered ceramic heater as recited in claim 9, wherein said pair of metal leads (4, 6) are made of tungsten.

11. A method of making a sintered ceramic heater comprising the steps of:
(a) mixing electrically conductive ceramic particles, insulating ceramic particles and rare earth metal oxides to form into a mixture component;
(b) preforming said mixture component to provide an unfired ceramic resistor to which a pair of metal leads are electrically connected.
(c) covering said unfired ceramic resistor and said metal leads with ceramic powder, thereby to form an unfired ceramic heater having leads; and
(d) co-firing said unfired ceramic heater, to combine said metal leads and said ceramic powder under a non-oxidizing atmosphere at a sintering temperature, and to form said unfired ceramic resistor into a resistor (12) consisting essentially of electrically conductive ceramic particles, secondary ceramic particles and a boundary grain phase having the general formula
2E₂O₃·Si₂₋ₓAlₓN₂₋ₓO₁₊ₓ
wherein E represents at least one element of rare earth metals and 0 < x < 2..

12. A method of making a sintered ceramic heater as recited in claim 11, wherein said pair of metal leads are made of tungsten.

13. A method of making a sintered ceramic heater as recited in claim 11 or 12, wherein said electrically conductive ceramic particles in the step (a) contain about 40-80 % by weight of at least one component selected from the group consisting of WC and MoSi₂.

14. A method of making a sintered ceramic heater as recited in claim 11, 12 or 13, wherein said insulating ceramic particles in the step (a) substantially consist of 18.9-58.9% by weight of silicon nitride, 0.5-5% by weight of aluminum nitride, 0.1-3% by weight of alumina and 0.5-4.5% by weight of at least one rare earth metal oxide.

15. A method of making a sintered ceramic heater as recited in claim 11, 12, 13 or 14, wherein said rare earth metal oxide is selected from the group consisting of Y₂O₃, Yb₂O₃ and Er₂O₃.

16. A glow plug (1) having a sintered ceramic heater (3) as recited in any one of claims 1-10.

17. A glow plug (1) as recited in claim 16, wherein the electrical resistance of the sintered ceramic heater (3) is greater than 500 mΩ.

18. A glow plug (1) as recited in claim 16, wherein the electrical resistance of the sintered ceramic heater (3) is in the range of from 500 to 900 mΩ.

19. A method of making a glow plug comprising a sintered ceramic heater manufactured in accordance with claims 11-15.

## Patentansprüche

1. Gesinterte keramische Heizvorrichtung (3), die aufweist, einen wärmeerzeugenden Widerstand (12) und einen den Widerstand umgebenden keramischen Isolator (11) ;
wobei der Widerstand (12) im wesentlichen aus elektrisch leitfähigen Keramikkörnchen, sekundären Keramikkörnchen und einer Korngrenzphase besteht, **dadurch gekennzeichnet, dass** die Korngrenzphase die allgemeine Formel
2E₂O₃·Si₂₋ₓAlₓN₂₋ₓO₁₊ₓ
hat, worin E wenigstens ein Element der Seltenerdmetalle darstellt und 0 < x < 2 ist.

2. Gesinterte keramische Heizvorrichtung nach Anspruch 1, bei der die elektrisch leitfähigen Keramikkörnchen wenigstens einen Bestandteil enthalten, der aus der Gruppe gewählt ist, die aus WC, MoSi₂ und Mo₅Si₃ besteht.

3. Gesinterte keramische Heizvorrichtung nach Anspruch 1 oder 2, bei der die sekundären Keramikkörnchen eine Verbindung enthalten, die ein expandiertes β-Phasen- Siliciumnitrid-Gitter und die allgemeine Formel Si_{6-z}Al_{z}N_{8-z}O_{z} hat, worin 0 ≤ z ≤ 5 ist.

4. Gesinterte keramische Heizvorrichtung nach Anspruch 1, 2 oder 3, bei der der spezifische Widerstandswert des Widerstandes größer als 10⁻⁴ Ω·cm ist.

5. Gesinterte keramische Heizvorrichtung nach einem der Ansprüche 1 bis 4, bei der der spezifische Widerstandswerts des Widerstands größer als 10⁻⁴ Ω·cm aber kleiner als 1,000 Ω·cm ist.

6. Gesinterte keramische Heizvorrichtung nach einem der Ansprüche 1 bis 5, bei der die elektrisch leitfähigen Keramikkörnchen und die sekundären Keramikkörnchen jeweils einen mittleren Korngrößendurchmesser von 2-5 µm haben.

7. Gesinterte keramische Heizvorrichtung nach einem der Ansprüche 1 bis 6, bei der der umgebende keramische Isolator (11) im wesentlichen aus einem Siliciumnitrid-Keramikmaterial besteht.

8. Gesinterte keramische Heizvorrichtung nach einem der Ansprüche 1 bis 7, bei der das Seltenerdmetall aus der Gruppe gewählt ist, die aus Erbium, Ytterbium und Yttrium besteht.

9. Gesinterte keramische Heizvorrichtung nach einem der Ansprüche 1 bis 8, die außerdem aufweist:
ein Paar Metallleiter (4, 6), die mit dem Widerstand (12) verbunden sind und die auch von dem keramischen Isolator (11) umgeben sind.

10. Gesinterte keramische Heizvorrichtung nach Anspruch 9, bei der die beiden Metallleiter (4, 6) aus Wolfram bestehen.

11. Verfahren zur Herstellung einer gesinterten keramischen Heizvorrichtung, das folgende Schritte aufweist:
(a) Vermischen von elektrisch leitfähigen Keramikteilchen, isolierenden Keramikteilchen und Seltenerdmetalloxide zur Bildung einer Gemischkomponente;
(b) Vorformen der Gemischkomponente zur Erzeugung eines ungebrannten Keramikwiderstandes, mit dem ein Paar Metallleiter elektrisch verbunden wird;
(c) Bedecken des ungebrannten Keramikwiderstandes und der Metallleiter mit Keramikpulver, um eine Leiter aufweisende ungebrannte keramische Heizvorrichtung zu bilden;
(d) Gemeinsames Brennen der ungebrannten keramischen Heizvorrichtung zur Verbindung der Metallleiter und des Keramikpulvers in einer nichtoxidierenden Atmosphäre bei einer Sintertemperatur und zur Umformung des ungebrannten Keramikwiderstands in einen Widerstand (12), der im wesentlichen aus elektrisch leitenden Keramikteilchen, sekundären Keramikteilchen und einer Korngrenzphase besteht, die die allgemeine Formel
2E₂O₃·Si₂₋ₓAlₓN₂₋ₓO₁₊ₓ
hat, worin E wenigstens ein Element der Seltenerdmetalle darstellt und 0 < x < 2 ist.

12. Verfahren zur Herstellung einer gesinterten keramischen Heizvorrichtung nach Anspruch 11, bei dem die beiden Metallleiter aus Wolfram bestehen.

13. Verfahren zur Herstellung einer gesinterten Heizvorrichtung nach Anspruch 11 oder 12, bei dem die elektrisch leitfähigen Keramikteilchen im Schritt (a) etwa 40-80 Gew.-% wenigstens eines Bestandteils enthalten, der aus der Gruppe gewählt ist, die aus WC und MoSi₂ besteht.

14. Verfahren zur Herstellung einer gesinterten keramischen Heizvorrichtung nach einem der Ansprüche 11, 12 oder 13, bei dem die isolierenden Keramikteilchen im Schritt (a) im wesentlichen aus 18,9-58,9 Gew.-% Siliciumnitrid, 0,5-5 Gew.-% Aluminiumnitrid, 0,1-3 Gew.-% Aluminiumoxid und 0,5-4,5 Gew.-% wenigstens eines Seltenerdmetalloxids bestehen.

15. Verfahren zur Herstellung einer gesinterten keramischen Heizvorrichtung nach einem der Ansprüche 11, 12, 13 oder 14, wobei das Seltenerdmetalloxid aus der Gruppe gewählt ist, die aus Y₂O₃, Yb₂O₃ und Er₂O₃ besteht.

16. Glühkerze (1), die eine gesinterte keramische Heizvorrichtung (3) gemäß einem der Ansprüche 1 bis 10 hat.

17. Glühkerze (1) nach Anspruch 16, bei der der elektrische Widerstandswert der gesinterten keramischen Heizvorrichtung (3) größer als 500 mΩ ist.

18. Glühkerze (1) nach Anspruch 16, bei der der elektrische Widerstandswert der gesinterten keramischen Heizvorrichtung (3) im Bereich von 500 bis 900 mΩ liegt.

19. Verfahren zur Herstellung einer Glühkerze, die eine in Übereinstimmung mit den Ansprüchen 11 bis 15 hergestellte gesinterte keramische Heizvorrichtung aufweist.

## Revendications

1. Dispositif de chauffage (3) en céramique frittée, comprenant :
une résistance chauffante (12) et un isolant (11) en céramique entourant ladite résistance ;
ladite résistance (12) étant essentiellement constituée de grains de céramique électriquement conductrice, de grains de céramique secondaires et d'une phase de grains marginaux, **caractérisé en ce que** ladite phase de grains marginaux a la formule générale
2E₂O₃·Si₂₋ₓAlₓN₂₋ₓO₁₊ₓ
où E représente au moins un élément choisi parmi les terres rares et 0 < x < 2.

2. Dispositif de chauffage en céramique frittée selon la revendication 1, dans lequel lesdits grains de céramique électriquement conductrice contiennent au moins un constituant choisi dans le groupe comprenant WC, MoSi₂ et Mo₅Si₃.

3. Dispositif de chauffage en céramique frittée selon la revendication 1 ou 2, dans lequel lesdits grains de céramique secondaires contiennent un composé ayant un réseau de nitrure de silicium expansé à phase β et ayant la formule générale Si_{6-z}Al_{z}N_{8-z}O_{z}, où 0 < z < 5.

4. Dispositif de chauffage en céramique frittée selon la revendication 1, 2 ou 3, dans lequel la valeur de la résistance spécifique de ladite résistance est supérieure à 10⁻⁴ Ω.cm

5. Dispositif de chauffage en céramique frittée selon l'une quelconque des revendications 1 à 4, dans lequel la valeur de la résistance spécifique de ladite résistance est supérieure à 10⁻⁴ Ω.cm mais inférieure à 1000 Ω.cm.

6. Dispositif de chauffage en céramique frittée selon l'une quelconque des revendications 1 à 5, dans lequel lesdits grains de céramique électriquement conductrice et lesdits grains de céramique secondaires ont les uns et les autres un diamètre moyen de 2 à 5 µm.

7. Dispositif de chauffage en céramique frittée selon l'une quelconque des revendications 1 à 6, dans lequel ledit isolant entourant en céramique (11) est essentiellement constitué de céramique à base de nitrure de silicium.

8. Dispositif de chauffage en céramique frittée selon l'une quelconque des revendications 1 à 7, dans lequel ladite terre rare est choisie dans le groupe comprenant l'erbium, l'ytterbium et l'yttrium.

9. Dispositif de chauffage en céramique frittée selon l'une quelconque des revendications 1 à 8, comprenant en outre :
une paire de conducteurs métalliques (4, 6) connectés à ladite résistance (12), lesdits conducteurs (4, 6) étant eux aussi entourés par ledit isolant en céramique (11).

10. Dispositif de chauffage en céramique frittée selon la revendication 9, dans lequel les conducteurs métalliques (4, 6) de ladite paire sont en tungstène.

11. Procédé de fabrication d'un dispositif de chauffage en céramique frittée, comprenant les étapes consistant à :
(a) mélanger des particules de céramique électriquement conductrice, des particules de céramique isolante et des oxydes de terres rares pour former un composé;
(b) préformer ledit composé pour réaliser une résistance en céramique crue à laquelle sont connectés deux conducteurs métalliques ;
(c) couvrir de poudre de céramique ladite résistance en céramique crue et lesdits conducteurs métalliques pour former de la sorte un dispositif de chauffage en céramique crue comportant des conducteurs ; et
(d) cuire simultanément ledit dispositif de chauffage en céramique crue, afin de combiner lesdits conducteurs métalliques et ladite poudre de céramique sous une atmosphère non-oxydante à une température de frittage, et de transformer ladite résistance en céramique crue en une résistance (12) essentiellement constituée de particules de céramique électriquement conductrice, de particules de céramique secondaires et d'une phase de grains marginaux ayant la formule générale
2E₂O₃·Si₂₋ₓAlₓN₂₋ₓO₁₊ₓ
où E représente au moins un élément des terres rares et 0 < x < 2.

12. Procédé de fabrication d'un dispositif de chauffage en céramique frittée selon la revendication 11, dans lequel les conducteurs métalliques de ladite paire sont en tungstène.

13. Procédé de fabrication d'un dispositif de chauffage en céramique frittée selon la revendication 11 ou 12, dans lequel lesdites particules de céramique électriquement conductrice de l'étape (a) contiennent environ 40 à 80% en poids d'au moins un constituant choisi dans le groupe comprenant WC et MoSi₂.

14. Procédé de fabrication d'un dispositif de chauffage en céramique frittée selon la revendication 11, 12 ou 13, dans lequel lesdites particules de céramique électriquement conductrice de l'étape (a) sont essentiellement constituées de 18,9 à 58,9% en poids de nitrure de silicium, 0,5 à 5% en poids de nitrure d'aluminium, 0,1 à 3% en poids d'alumine et 0,5 à 4,5% en poids d'au moins un oxyde de terre rare.

15. Procédé de fabrication d'un dispositif de chauffage en céramique frittée selon la revendication 11, 12, 13 ou 14, dans lequel ledit oxyde de terre rare est choisi dans le groupe comprenant Y₂O₃, Yb₂O₃ et Er₂O₃.

16. Bougie de préchauffage (1) comportant un dispositif de chauffage (3) en céramique frittée selon l'une quelconque des revendications 1 à 10.

17. Bougie de préchauffage (1) selon la revendication 16, dans laquelle la valeur de résistance électrique du dispositif de chauffage (3) en céramique frittée est supérieure à 500 mΩ.

18. Bougie de préchauffage (1) selon la revendication 16, dans laquelle la valeur de résistance électrique du dispositif de chauffage (3) en céramique frittée est comprise entre 500 et 900 mΩ.

19. Procédé de fabrication de bougie de préchauffage comportant un dispositif de chauffage en céramique frittée selon les revendications 11 à 15.
